# EUROPÄISCHE PATENTANMELDUNG

(11) **EP 3 101 063 A1**
(43) Veröffentlichungstag der Anmeldung: **07.12.2016**
(21) Anmeldenummer: 16001247.2
(22) Anmeldetag: 31.05.2016
(51) Int. Cl.: C08K 3/36, C08K 5/098, C09D 163/00, C08K 9/04

(54) **INNENBESCHICHTUNGEN VON TRINKWASSERROHREN AUF EPOXYDBASIS UND EIN VERFAHREN ZU IHRER HERSTELLUNG**

(30) Priorität: 31.05.2015 DE 102015007116; 27.05.2016 DE 102016006694
(71) Anmelder: El Kudsi, Karim, 90587 Obermichelbach (DE)
(72) Erfinder: El Kudsi, Karim, 90587 Obermichelbach (DE)
(74) Vertreter: Gulde, Klaus W.

(57) **Zusammenfassung**

Die Erfindung bezieht sich auf Innenbeschichtungen von Trinkwasserrohren auf Epoxydharzbasis, herstellbar durch Umsetzung eines Zwei-Komponenten-Systemes mit den Komponenten A und B und ein Verfahren zur Herstellung der Innenbeschichtungen. Aufgabe der Erfindung ist es für die Innenbeschichtung von aus Metallen oder Kunststoffen bestehenden Trinkwasserrohren Epoxidharze anzubieten, die kalthärtend sind, eine hohe Sperrfähigkeit gegen Gase und einen sehr guten Korrosionsschutz bewirken. Darüber hinaus sollen sie die hygienischen Voraussetzungen, wie keine Bisphenol-A-basierten Epoxydharze und keine aromatischen bzw. araliphatischen Amine oder Polyetheramine als Härter enthalten, erfüllen, keine Antioxidantien oder Korrosionsschutzmittel als Additive enthalten, und eine schnelle Aushärtung (max.12 Stunden, Topfzeit von 30 bis 90 min) ermöglichen. Die Lösung der Aufgabe erfolgt mit Innenbeschichtungen von Trinkwasserrohren auf Epoxydharzbasis, herstellbar, durch Umsetzung eines Zwei-Komponenten-Systemes (A,B), wobei die Komponente A enthält (A1) einen auf Cycloaliphaten und/oder Dicycloaliphaten basierenden Di- oder Polyglycidether bzw. -ester oder einem Cyclo- oder Dicycloaliphaten mit einer oder mehreren Epoxydgruppen direkt am/an den cycloaliphatischen Ring/en, (A2) einen aliphatischen Diglycidether, wobei die aliphatische Kette zwischen den Glycidgruppen 2 bis 18 Kohlenstoffatome umfasst, (A3) Siliciumdioxid und die Komponente B enthält (B1) eine oder mehrere aliphatische und/oder cycloaliphatische Di- und/oder Polyamine, (B2) eine Lösung eines Kaliumcarboxylats in einem Glykol oder einem Diglycidether und/oder eine Dispersion eines Additionsproduktes eines oder mehrerer Kaliumcarboxylate an einen nanoskaligen oder mikronisierten Feststoff in einem Glykol oder einem Diglycidether, wobei die Komponenten A und B im Verhältnis ihrer reaktiven Äquivalente im Verhältnis der Epoxyd- zu den Amingruppen zwischen 1 : 0,3 bis 1 : 5 zur Reaktion gebracht werden.

## Beschreibung

Die Erfindung bezieht sich auf Innenbeschichtungen von Trinkwasserrohren auf Epoxydharzbasis, herstellbar durch Umsetzung eines Zwei-Komponenten-Systemes mit den Komponenten A und B und ein Verfahren zur Herstellung von Innenbeschichtungen von Trinkwasserrohren auf Epoxydharzbasis durch Umsetzung eines Zwei-Komponenten-Systems mit den Komponenten A und B.

Zur Verringerung der Sauerstoffdiffusion sind in der Patentliteratur einige wenige Lösungswege beschrieben worden. Am nächsten der eigenen Entwicklung kommt die US-Schrift 2010/ 0160 494 A1 (Mitsubishi Gas Chemical Co. Inc., 24. 06. 2010), nach der Gemische aus Epoxydharzen und Härtern aus einem Amingemisch, basierend auf Xylylendiamin, Polyacylverbindungen, Monocarbonsäuren und einer Carbonatverbindung, mit verlängerter Topfzeit umgesetzt werden. Die Verwendung der Säureverbindungen ist für den vorgesehenen Anwendungsfall kritisch zu sehen, da diese in Rohrleitungen mit durchfließendem Wasser ausgelaugt werden oder den Abbau der Harze katalysieren können.

Eine weitere technische Lösung betrifft Drei-Schichten-Systeme, bei denen zwischen zwei Epoxydharzschichten eine Siloxanschicht aufgebaut wird (WO 97/42027 der R.R. Mowrer, J. F. Kane, C. G. Hull, 13. 11. 1997), wobei das Siloxan oder ein Organosilan auch dem Epoxydharz zugesetzt werden kann.

Weitere technische Lösungen betreffen den Einsatz von Vinylester-Epoxydharzen (z. B. DE 602004010738 T2 der Astrium SAS, 24. 12. 2008), Gemische aus Epoxydharzen und Silanolverbindungen (DE 4008343 A1 der Kansai Paint Co. Ltd., 20. 09. 1990), den Einsatz von bestimmten Füllstoffen (US 2011/00589948 A1, 10. 03. 2011) oder die Modifizierung der Epoxydharze mit elastifizierenden Gummiteilchen für Gastanks (US 2009/0255939 A1 vom 15. 10. 2009).

Gasdiffusionsbarrieren werden weiterhin durch anorganische Schichten auf oder in Polymeren hergestellt, z. B. durch Hexamethyldisiloxan auf PET im Lichtbogenplasma oder durch Aluminiumoxidfilme als Zwischenschichten (siehe z. B. C. A. Wilson et al., Chem. Mater. 17, 5625 (2005), M. D. Groner et al., Appl. Phys. Lett. 88, 051907 (2006), A. A. Dameron et al., J. Phys. Chem. C 112, 4573 (2008), R. Cooper et al., Thin Solid Films 516, 4036 (2008)). Die Gasdiffusionseigenschaften von Polymeren werden in I. Cozmuta et al., J. Phys. Chem. B 111, 3151-3166 (2007) bzw. M. Salame et al., Polym. Engng. Sci. 26 (22) (1986) untersucht und beschrieben.

In der US 4,943,610 werden schrumpfungsfreie modifizierte Epoxydharze mit Lactonverbindungen und Bisphenol-A-diglycidether beschrieben.

In der US 2010/0084037 wird eine Methode und eine Zusammensetzung zur Innenbeschichtung von Rohren durch Acrylate oder Epoxyde mit einem Photoinitiator, Pigmenten Antioxidantien, Lichtstabilisatoren und/oder anderen Additiven beschrieben, wobei das Rohr vor dem Auftragen des Beschichtungsmaterials einem Oxidationsschritt unterworfen wird. In der Veröffentlichung von R. Kultzow und S. Foxhill, Cycloaliphatic Epoxy Resins (Meeting of the Thermoset Resin Formulators Association, Savannah, 2007) werden aminisch und mit Carbonsäuren härtende Systeme mit metallorganischen Katalysatoren beschrieben, die trotz der Katalyse Härtungszeiten >2000 min aufweisen (Tabelle 4). Die auf 1-N,N-(bis-2,3-epoxypropyl)-4-(2,3-epoxypropoxy)benzol basierenden Systeme müssen noch mindestebs zwei Stunden bei 90°C, 1 Stunde bei 150°C und 1 Stunde bei 200°C gehärtet werden.

In der US 2012/0083564 werden Härter für Epoxydharze beschrieben, die aus ethylenisch ungesättigten Anhydriden und einer Vinylverbindung bestehen.

In der US 2010/0292415 werden vernetzende Harze aus einer Epoxydharzmischung bestehend aus einem cycloaliphatischen Epoxydharz, einem cycloaliphatischen Anhydrid und einem Katalysator mit Glasübergangstemperaturen oberhalb 210°C beschrieben. In der US 2011/0058948 werden Epoxydharze für Windräder beschrieben, die aus einem oder mehreren Epoxydharzen und einem oder meheren Epoxyvinylestern, einem oder mehreren reaktiven Verdünnungsmitteln und wenigstens eine, amphiphilen Blockcopolymeren bestehen.

In der US 2010/0160494 werden aminische Härter für Epoxydharze bestehend aus m- oder p-Xylylendiamin beschrieben. Nach der WO 82/04256 werden flüssige cycloaliphatische Epoxydharze mit diphenolischen Verbindungen gehärtet. Von W. J. Blank, Z. A. He, M. Picci werden Katalysatoren für die Epoxyd-Carboxyl-Reaktion untersucht und festgestellt, dass Amine und Phosphoniumverbindungen aktiv sind (Vortrag Int. Waterborne, High Solids and Powder Coatings Symposium, New Orleans, 21.-23. 2. 2001). Von W. J. Blank, K. Dietliker, T. Jung, C. Lordelot, A. Carroy werden Katalysatoren mit verzögerter Wirkung beschrieben, bei denen es sich um 1,1,3-trisubstituierte Harnstoffe handelt (Vortrag Basel 2008).

In der US 6,730,353 werden Beschichtungen für Trinkwasser-Leitungen beschrieben, die aus Epoxydharzen und Polyamin-Härtern bestehen, wobei die Aminhärter Gemische aus einem oder mehreren aromatischen Polyaminen und einem oder meheren oligomeren Polyaminen sind.

Nach der EP 0 767 189 werden Epoxydharze mit Diaminen, die primäre und tertiäre Aminogruppen enthalten gehärtet, wobei die tertiäre Aminogruppe als Katalysator wirken soll.

In EP 2 765 148 werden Innenbeschichtungen von Fußbodenheizungsrohren auf Epoxydharzbasis aus cycloaliphatischen oder aliphatischen Di- oder Triepoxyden, epoxydierten natürlichen Ölen, Silanen oder Siloxanen, Katalysatoren und ggf. weiteren Additiven beschrieben, die sich allerdings nicht für die Innenbeschichtung von Trinkwasserrohren eignen.

Für Innenbeschichtungen von Trinkwasserrohren, d. h. relativ kalter Wandung (10 bis 20°C) des Rohrs, sind jedoch neben er hohen Sperrfähigkeit gegen Gase weiterhin die hygienischen Voraussetzungen, d. h. keine Bisphenol-A-basierten Epoxydharze und keine armatischen bzw. araliphatischen Amine oder Polyetheramine als Härter, keine Antioxidantien oder Korrosionsschutzmittel als Additive, und die Aushärtung innerhalb von maximal 12 Stunden bei einer Topfzeit von 30 bis 90 min erforderlich. Diese Bedingungen werden nach dem Stand der Technik von den verfügbaren Epoxydharz-Systemen nicht erfüllt.

Aufgabe der Erfindung ist es für die Innenbeschichtung von aus Metallen oder Kunststoffen bestehenden Trinkwasserrohren Epoxidharze anzubieten, die kalthärtend sind, eine hohe Sperrfähigkeit gegen Gase und einen sehr guten Korrosionsschutz aufweisen. Darüber hinaus sollen sie die hygienischen Voraussetzungen, wie keine Bisphenol-A-basierten Epoxydharze und keine aromatischen bzw. araliphatischen Amine oder Polyetheramine als Härter, erfüllen, keine Antioxidantien oder Korrosionsschutzmittel als Additive enthalten, und die Aushärtung innerhalb von maximal 12 Stunden bei einer Topfzeit von 30 bis 90 min ermöglichen.

Die Lösung der Aufgabe erfolgt erfindungsgemäß mit Innenbeschichtungen von Trinkwasserrohren auf Epoxydharzbasis, herstellbar durch Umsetzung eines Zwei-Komponenten-Systemes mit den Komponenten A und B, wobei die Komponente A enthält
(A1) einen auf Cycloaliphaten und/oder Dicycloaliphaten basierenden Di- oder Polyglycidether bzw. -ester (A1) oder einem Cyclo- oder Dicycloaliphaten mit einer oder mehreren Epoxydgruppe/n direkt am/an den cycloaliphatischen Ring/en,
(A2) einen aliphatischen Diglycidether, wobei die aliphatische Kette zwischen den Glycidgruppen 2 bis 18 Kohlenstoffatome umfasst,
(A3) Siliciumdioxid
und die Komponente B enthält
(B1) ein oder mehrere aliphatische und/oder cycloaliphatische Di- und/oder Polyamine
(B2) eine Lösung eines Kaliumcarboxylats in einem Glykol oder einem Diglycidether und/oder eine Dispersion eines Additionsproduktes eines oder mehrerer Kaliumcarboxylate an einen nanoskaligen oder mikronisierten Feststoff in einem Glykol oder einem Diglycidether,
wobei die Komponenten A und B im Verhältnis ihrer reaktiven Äquivalente im Verhältnis der Epoxyd- zu den Amingruppen zwischen 1 : 0,3 bis 1 : 5 auf einer Rohrinnenfläche zur Reaktion gebracht werden und
einem Verfahren zur Herstellung von Innenbeschichtungen von Trinkwasserrohren auf Epoxydharzbasis durch Umsetzung eines Zwei-Komponenten-Systems mit den Komponenten A und B, welches dadurch gekennzeichnet ist,
dass die Komponente A, umfassend
(A1) ein auf Cycloaliphaten und/oder Dicycloaliphaten basierenden Di- oder Polyglycidether oder -ester oder einem Cyclo- oder Dicycloaliphaten mit einer oder mehreren Epoxydgruppe/n am/an den cycloaliphatischen Ring/en,
(A2) einen aliphatischen Diglycidether, wobei die aliphatische Kette zwischen den Glycidgruppen 2 bis 18 Kohlenstoffatome umfasst,
(A3) Siliciumdioxid
und die Komponente B,
umfassend
(B1) ein oder mehrere aliphatische und/oder cycloaliphatische Di- und/oder Polyamine
(B2) eine Lösung eines Kaliumcarboxylats in einem Glykol oder einem Diglycidether und/oder eine Dispersion eines Additionsproduktes eines oder mehrerer Kaliumcarboxylate an einen nanoskaligen oder mikronisierten Feststoff in einem Glykol oder einem Diglycidether, im Verhältnis ihrer reaktiven Äquivalente im Verhältnis der Epoxyd- zu den Amingruppen zwischen 1 : 0,3 bis 1 : 5 auf einer Rohrinnenfläche zur Reaktion gebracht werden.

Vorteilhafte Weiterbildungen werden in Unteransprüchen angegeben.

Danach wird als Komponente A1 Glycidester der 1,2-Cyclohexandicarbonsäure, der 1,2-Cyclohexan-endomethylen-dicarbonsäure, der 1,2-Cyclohexan-endomethylen-dicarbonsäure, der 1,3-Cyclohexan- dicarbonsäure, der 1,3-Cyclohexan-endomethylen-dicarbonsäure, der Methylen-bis(4,4'-cyclohexyl-carbonsäure) sowie Polyglycidether auf der Basis cycloaliphatischer Körper verwendet werden, z. B. 2,2-Bis-(2,3-epoxypropoxy-4-cyclohexyl)propan, 3,4-Epoxycyclohexylmethyl-3,4-epoxycyclohexane-carboxylat, Cyclohexan-1,4-dimethanol-diglycidether sowie auf Dicyclopentadien basierende Epoxyde eingesetzt.

Als Komponente A2 werden in einer Ausgestaltung Diglycidether wie Ethylenglykol-diglycidether, Diethylenglykol-diglycidether, Triethylenglykol-diglycidether, Propylenglykol-diglycidether, Butan-1,4-diol-diglycidether, Neopentylglykol-diglycidether, Pentan-1,5-diol-diglycidether, Hexan-1,6-diol-diglycidether, Bis-(2,3-epoxypropoxy)-2,2-dicyclohexyl-propan, Bis-(2,3-epoxypropoxy)-1,4-cyclohexan, Cyclohexan-1,4-dimethanol-diglycidether, Triglycidylether des Trimethylolpropans, Diglycidylether von Polypropylenglykolen, Triglycidylether von oxypropyliertem Glycerin oder Trimethylolpropan, Polytetrahydrofurandiglycidether eingesetzt.

Als Komponente A4 werden weitere feste Zusatzstoffe, insbesondere nanoskalige und/oder mikronisierte Metalloxide, Metallhydroxide und/oder Metalloxidhydroxide und/oder Halbmetalloxide eingesetzt, die vorteilhafterweise als Verstärkungsmittel im Netzwerk wirken.

Weiterhin werden zur Komponente A4 Verbindungen gezählt, die adsorbierend oder absorbierend wirken, z. B. Montmorrilinit, Bentonite, basische mikronisierte oder nanoskalige Bentonite, polymere Adsorbentien wie Acrylate, vernetzte Acrylate, Hydrogele usw. Diese Adsorbentien oder Absorbentien adsorbieren oder absorbieren vorteilhafterweise in den technischen Rohstoffen enthaltene niedermolekulare Verbindungen, z. B. aus unvollständiger Umsetzung der Reaktionskomponenten oder als unerwünschte Begleitstoffe, so dass diese durch Wasser nicht ausgelaugt werden können.

In einer weiteren Ausgestaltung werden die Glycidester A1 mit den Glycidethern A2 im Gewichtsverhältnis der beiden Glycidylverbindungen von 99,5 : 0,5 bis 75 : 25 kombiniert. Diese Verfahrensweise ist z. B. zur Herstellung von Beschichtungssystemen, bei denen eine bestimmte Viskosität der Harzmischung im Moment des Auftrags erforderlich ist, von Vorteil.

Als Komponente B1 sind vorteilhaftereise aliphatische primäre Diamine wie Ethylendiamin, Diethylentriamin, 1,3-Propandiamin, Dipropylentriamin, N-Methyl-bis(3-aminopropyl)-amin, 2,2,4-Trimethylhexan-1,6-diamin, 2,4,4- Trimethylhexan-1,6-diamin, 3-Aminomethyl-3,5,5-trimethylcyclohexylamin (Isophorondiamin, IPDA), 1,4-Cyclohexandiamin, 2,2'-Dimethyl-4,4'-methylene-bis(cyclohexylamin), N-(2-Aminoethyl)-N-cyclohexylamin, 3-(Cyclohexylamino)-propylamin, 1,5-Diamino-2-methylpentan (MPMD), 2₋Butyl-2-ethyl-1,5-pentandiamin (C11-Neodiamin), 1,3-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan,
aliphatische sekundäre Diamine wie N-Ethylpiperazin, N,N'-Bis-(sec-butyl)-4,4'-diaminodicyclohexylamin, N-Methyl-1,3-propandiamin, N-Cyclohexyl-1,3-propandiamin, aliphatische Triamine wie 3-(2-Aminoethyl)aminopropylamin, Diethylentriamin (DETA), Dipropylentriamin (DPTA), N-(2-Aminoethyl)-1,3-propandiamin (N3-Amin), N,N'-Bis(3-aminopropyl)ethylendiamin (N4-Amin), N,N'-Bis-(3-aminopropyl)-1,4-diaminobutan, N5-(3-Aminopropyl)-2-methyl-1,5-pentandiamin, N3-(3-Amino-pentyl)-1,3-pentandiamin, N5-(3-Amino-1-ethylpropyl)-2-methyl-1,5-pentandiamin und N,N'-Bis-(3-amino-1-ethylpropyl)-2-methyl-1,5-pentandiamin, 4-Aminomethyl-1,8-octandiamin, 1,3,5-Tris-(aminomethyl)-cyclohexan, Tris-(2-aminoethyl)-amin, Tris-(2-aminopropyl)-amin, Tris-(3-aminopropyl)-amin, Bis-hexamethylentriamin,

Polyamine mit primären und/oder sekundären Aminogruppen wie Tetraethylenpentamin (TEPA), Pentaethylenhexamin (PEHA) und höhere Homologe linearer Polyethylenamine wie Polyethylenpolyamin mit 5 bis 7 Ethylenamin-Einheiten oder Polyetheramine mit mindestens 2,5 Aminogruppen im Molekül, die sich von tri- oder höherfunktionellen Polyetheralkoholen ableiten oder Gemische davon und
Gemische von 3-Aminomethyl-3,5,5-trimethylcyclohexylamin und 2,2,4-/2,4,4-Trimethylhexan-1,6-diamin (TMD) im Verhältnis von 0,5 : 99,5 bis 56 : 44 Teilen enthalten.

Als katalytisch wirkende Komponente B2 werden Kaliumoctoat, Kaliumacetat, Kaliumoleat, Kaliumformiat, Kalium-2-ethyl-hexanoat eingesetzt. In einer besonderen Form der erfindungsgemäßen Katalyse werden diese Metallcarboxylate, wie Kaliumcarboxylate, mit nanoskaligen Metalloxiden oder Metallhydroxiden oder Halbmetalloxiden in Kontakt gebracht, so dass sich die Metallcarboxylate an die Oxide adsorbieren. Solche festen, nanoskaligen Katalysatoren sind insbesondere bei der Herstellung dünner Schichten von Vorteil. Beispielhaft kann z. B. Kaliumoctoat in Diethylenglykol mit einem schwach sauren Siliciumdioxid (z. B. Aerosil® 380 der Evonik AG) versetzt werden, so dass eine Adsorptionsverbindung gebildet wird.

In einer weiteren Ausgestaltung werden die Komponente A mit einem Teil der Komponente B zur Bildung einer Komponente AB und die Komponente B mit einem Teil der Komponente A zur Bildung einer Komponente BA umgesetzt werden und dann die Komponenten AB und BA unter Auftragung auf die Rohrinnenfläche zur Umsetzung gebracht, wobei bis zu 30% der äquivalenten Menge der Komponente B mit der Komponente A und bis 30% der äquivalenten Menge der Komponente A mit der Komponente B zur Bildung der Komponente AB bzw. BA umgesetzt werden. Durch diese Vorgehensweise wird ein Zwei-Komponenten-System mit einstellbarer Viskosität und eingestellter Topf- und Härtungszeit hergestellt.

Bevorzugt werden die A-Komponente und die B-Komponente in folgenden Anteilen zusammengestellt:
A1: 50 bis 99 Teile eines auf einem Cycloaliphaten und/oder Dicycloaliphaten basierenden Di- oder Polyglycidether bzw. -esters,
A2: 49 bis 1 Teil eines aliphatischen Diglycidethers, wobei die aliphatische Kette zwischen den Glycidgruppen 2 bis 18 Kohlenstoffatome umfasst,
A3: 0,01 bis 10 Teile fester Zusatzstoffe, insbesondere nanoskaliger und/oder mikronisierter Metalloxide, Metallhydroxide und/oder Metalloxidhydroxide und/oder Halbmetalloxide,
mit der Maßgabe, dass sich die Mengen zu 100 Teilen ergänzen, mit einer B-Komponente, enthalten
B1: einem oder mehreren aliphatischen und/oder cycloaliphatischen Di-, Tri- und/oder Polyaminen
B2: 1 bis 1000 ppm einer Lösung eines Kaliumcarboxylats in einem Glykol oder einem Diglycidether und/oder eine Dispersion eines Additionsproduktes eines oder mehrerer Kaliumcarboxylate an einen nanoskaligen oder mikronisierten Feststoff in einem Glykol oder einem Diglycidether.

Danach werden sie zur Reaktion gebracht.

In einer weiteren bevorzugten Ausführungsform werden das Gemisch der A-Komponerite mit 1 bis 25 Teilen eines Amins oder Amingemisches aus einem oder mehreren aliphatischen und/oder cycloaliphatischen Di- und/oder Polyaminen bei 25 bis 85°C in 0,5 bis 5 Stunden zur Umsetzung gebracht, so dass ein Teil der Epoxydgruppen reagiert und die Viskosität des entstehenden Produkts zwischen 1000 und 20.000 mPas (25°C) liegt und das oder die Amine der B-Komponente mit 1 bis 25 Teilen des Gemisches der A-Komponente bei 25 bis 85°C in 0,5 bis 5 Stunden zur Umsetzung gebracht, so dass ein Teil der Aminogruppen reagiert und die Viskosität des entstehenden Produkts zwischen 1000 und 20.000 mPas (25°C) liegt, wodurch ein Zwei-Komponenten-System mit einstellbarer Viskosität und eingestellter Topf- und Härtungszeit hergestellt wird.

Es wurde weiterhin vorteilhafterweise gefunden, dass beim Einsatz der erfindungsgemäßen Innenbeschichtung in Auslaugungstests im Wesentlichen keine bedenklichen Stoffe im Wasser nachgewiesen werden konnten, dass sich die Schicht fest und chemisch mit den Rohrleitungswänden verbindet, dass der Sauerstoff-Diffusionswert bei ca. 0,1 % der herkömmlichen Beschichtungen liegt, so dass eine Korrosion des Rohrmaterials verhindert wird und dass die Umsetzung der Komponenten A und B auf der Innenseite der Trinkwasserrohre durch die katalytische Wirkung der Komponente B2 so erfolgt, dass die Rohrleitungen spätestens nach 12 Stunden wieder genutzt werden können, ohne dass eine thermische Nachhärtung erforderlich ist.

Als geeignete Epoxydharzkomponenten kommen vor allem die Glycidester (A1) der 1,2-Cyclohexandicarbonsäure, der 1,2-Cyclohexan-endomethylen-dicarbonsäure, der 1,2-Cyclohexan-endomethylen-dicarbonsäure, der 1,3-Cyclohexandicarbonsäure, der 1,3-Cyclohexan-endomethylen-dicarbonsäure, der Methylen-bis(4,4'-cyclohexyl-carbonsäure) etc. in Frage.

Alternativ können Polyglycidether (A1) auf der Basis cycloaliphatischer Körper verwendet werden, z. B. 2,2-Bis-(2,3-epoxypropoxy-4-cyclohexyl)propan, 3,4-Epoxycyclohexylmethyl-3,4-epoxycyclohexan-carboxylat, 7-Oxabicyclo[4.1.0]heptan-3-carboxyl-oxabicyclo[4.1.0]hept-3-yl-methylester, bis((3,4-epoxycyclohexyl)methyl)adipat, 7-(4,5-epoxytetrahydrophthalsäurediglycidylester, 1,4-Cyclohexanedimethanol bis(3,4-epoxycyclohexancarboxylat), Dicyclopentadiendioxide, sowie auf Dicyclopentadien basierende Epoxyde eingesetzt werden.

Als geeignete aliphatische Diglycidether (A2) kommen in Frage Ethylenglykol-diglycidether, Diethylenglykol-diglycidether, Triethylenglykol-diglycidether, Propylenglykol-diglycidether, Butan-1,4-diol-diglycidether, Neopentylglykol-diglycidether, Pentan-1,5-diol-diglycidether, Hexan-1,6-diol-diglycidether, Bis-(2,3-epoxypropoxy)-2,2-dicyclohexyl-propan, Bis-(2,3-epoxypropoxy)-1,4-cyclohexan, Triglycidylether des Trimethylolpropans, Diglycidylether von Polypropylenglykolen, Triglycidylether von propoxyliertem Glycerin oder Trimethylolpropan, Polytetrahydrofuran-diglycidether etc.

Es hat sich hinsichtlich des Aushärtungsverhaltens und der Sauerstoffsperrwirkung als vorteilhaft erwiesen, die cycloaliphatischen Glycidester oder -ether A1 mit den aliphatischen Glycidethern A2 zu kombinieren, wobei ein Gewichtsverhältnis von A1 zu A2 von 99,5 : 0,5 bis 75 : 25 besonders vorteilhaft ist. Die aliphatischen Glycidether wirken auf Grund ihrer Struktur als Flexibilisatoren im System und erhöhen den Umsatz während der Härtung, so dass bereits im kalthärtenden System höhere Glasübergänge erzielt werden. An Stelle der Di- oder Triglycidester können auch spezielle Di- oder Polyepoxyde verwendet werden, die die gleiche Voraussetzung erfüllen, z. B. 2,2-Bis-(2,3-epoxypropoxy-4-cyclohexyl)propan oder 3,4-Epoxycyclohexylmethyl-3,4-epoxycyclohexan-carboxylat.

Erfindungsgemäß geeignete Di- oder Polyamine (B1) sind aliphatische Amine wie Ethylendiamin, Diethylentriamin, 1,3-Propandiamin, Dipropylentriamin, N-Methyl-bis(3-aminopropyl)-amin, 2,2,4-Trimethylhexan-1,6-diamin, 2,4,4- Trimethylhexan-1,6-diamin, 3-Aminomethyl-3,5,5-trimethylcyclohexylamin (Isophorondiamin, IPDA), 1,4-Cyclohexandiamin, 2,2'-Dimethyl-4,4'-methylene-bis(cyclohexylamin), N-(2-Aminoethyl)-N-cyclohexylamin, N-Ethylpiperazin, N,N'-Bis-(sec-butyl)-4,4'-diaminodicyclohexylamin, 3-(Cyclohexylamino)-propylamin etc. oder Gemische davon.

Besonders bevorzugt werden Gemische von 3-Aminomethyl-3,5,5-trimethylcyclohexylamin und 2,2,4-/2,4,4-Trimethylhexan-1,6-diamin (TMD) im Verhältnis von 0,5 : 99,5 bis 56 : 44 Teilen. Diese Amingemische sind besonders vorteilhaft in Bezug auf Korrosionsschutz und Aushärtungsverhalten. Durch die Einstellung des Mischungsverhältnisses wird der Umsatz bis zum Erreichen der Härtung bestimmt. Bei 5 Teilen TMD und 95 Teilen IPDA kann z. B. mit einem Gemisch von 95 Teilen Cyclohexan-1,2-dicarbonsäure-diglycidester und 5 Teilern Pentan-1,5-diol-diglycidether ein Umsatz bis zu 88 % bei einem Glasübergang von 93°C (DSC) erreicht werden.

Es ist ein weiterer Vorteil der erfindungsgemäßen Systeme, dass mit diesen Materialien alle verfügbaren Rohrleitungsmaterialien beschichtet werden können, d. h. Metalle wie Stahl, Kupfer, Aluminium, Messing etc., Kunststoffe wie Polypropylen (PP), Polyethylen (HDPE, LDPE, LLDPE, HMWPE), Copolymere, EPDM etc.

Ein Problem der aliphatischen Epoxydharz-Reaktionssysteme ist deren niedrige Reaktionsgeschwindigkeit, d. h. bei langen Topfzeiten erfolgt eine Aushärtung, die in ungünstigen Fällen mehrere Tage in Anspruch nehmen kann. Folglich ist deshalb eine Vielzahl von Verbindungen untersucht worden, um die Härtung dieser Systeme zu beschleunigen. Zu den vorgeschlagenen Katalysatoren zählen z. B. Tris-2,4,6-(dimethylaminomethyl)-phenol, N,N'-Diethylpiperazin, N-Methylimidazol, Zinkverbindungen, Metallacetylacetonate, aber auch Heterokatalysatoren oder Latentkatalysatoren. Die Vielzahl der bisher beschriebenen Verbindungen oder Gemische weist auf ein generelles Problem hin.

Es wurde nun gefunden, dass bestimmte Alkalimetallcarboxylate auch die Epoxyd-Amin-Reaktion katalysieren. Als geeignete Alkalimetallcarboxylate können z. B. Kaliumoctoat, Kaliumacetat, Kaliumoleat, Natriumactet, Natriumformiat, Lithiumformiat, Kalium-2-ethylhexanoat etc. benannt werden. Vorteilhafterweise werden diese Metallcarboxylate in Lösung in einem Glykol, z. B. Ethylenglykol oder Diethylenglykol, verwendet. Diese Lösungen enthalten zwischen 10 und 50 Gew.-% des Metallcarboxylats. Bevorzugt werden Lösungen von Kaliumoleat in Diethylenglykol oder Kaliumacetat in Ethylenglykol.

Vorzugsweise werden diese Katalysatoren in sehr geringen Mengen eingesetzt, z. B. im Bereich von 1 bis 1000 ppm bezogen auf die Härterkomponente (B). Besonders bevorzugt wird der Bereich von 5 bis 300 ppm bezogen auf die Härterkomponente. Da die Katalysatoren eine sehr hohe Aktivität aufweisen, ist ein Einbringen in die Harzkomponente (die übliche Verfahrensweise) wenig sinnvoll, da das zu deren Instabilität führen würde.

Weiterhin werden vorteilhafterweise in die Reaktionssysteme 0,01 bis 10 Teile weitere feste Zusatzstoffe (A4), insbesondere nanoskalige und/oder mikronisierte Metalloxide, Metallhydroxide und/oder Metalloxidhydroxide und/oder Halbmetalloxide eingearbeitet. Diese dienen als Nucleierungsmittel bzw. Verstärkungsmittel zum Aufbau der Morphologie, zur Thixotropierung der Systeme, zu deren Einfärbung (die u. U. durch Regelwerke vorgeschrieben ist) oder als Verträglichkeitsvermittler. Geeignete nanoskalige und/oder mikronisierte Metalloxide, Metallhydroxide und/oder Metalloxidhydroxide und/oder Halbmetalloxide sind z. B. Siliciumdioxide, pyrogene Kieselsäuren, Aluminiumoxide unterschiedlichen Trocknungsgrades und unterschiedlicher Teilchengröße, Magnesiumoxid, Magnesiumhydroxid, Aluminiumhydroxid, Aluminiumoxidhydroxid (Böhmit), Eisen-II-oxid, Eisen-III-Oxid, Magnetit, Hämatit usw. Es können auch bekannte Metalloxid-Pigmente oder weitere Feststoffe verwendet werden.

Die A-Komponente wird durch Vermischen der genannten Komponenten in den angegebenen Mischungsverhältnissen in Dissolvern, Rührreaktoren, Knetern, Rührkesseln oder durch Tauchrührer in IBC hergestellt. Die B-Komponente wird in der Regel in geschlossenen Rührreaktoren hergestellt.

Zur beschriebenen Ausführungsform unter Verwendung von teilweise umgesetzten Komponenten (AB, BA) werden Gemische durch Verrühren unter Einhaltung bestimmter Temperaturgrenzen umgesetzt, so dass ein Teil der reaktiven Gruppen umgesetzt ist. Diese Verfahrensweise ist z. B. zur Herstellung von Beschichtungssystemen, bei denen eine bestimmte Viskosität der Harzmischung im Moment des Auftrags erforderlich ist, von Vorteil.

Zur Umsetzung eines Teils der Epoxydgruppen der A-Komponente wird (Herstellung von AB) das Gemisch der A-Komponente aus dem Glycidester-/Glycidether-Gemisch mit 1 bis 25 Teilen eines Amins oder Amingemisches aus einem oder mehreren aliphatischen und/oder cycloaliphatischen Di- und/oder Polyaminen bei 25 bis 85°C in 0,5 bis 5 Stunden zur Umsetzung gebracht. Innerhalb von 2 bis 24 Stunden reagiert ein Teil der Epoxydgruppen, die Viskosität wird durch das Verhältnis der eingesetzten Komponenten bestimmt und liegt bei dem entstehenden Produkt zwischen 1000 und 20.000 mPas (25°C).

Analog wird mit der Härterkomponente B verfahren (Herstellung von BA). Auch bei dieser wird ein Teil der Aminogruppen mit Epoxydgruppen der Harzkomponente umgesetzt. Vorteilhafterweise werden 99 bis 75 Teile der B-Komponente mit 1 bis 25 Teilen des Gemisches der A-Komponente bei 25 bis 85°C in 0,5 bis 5 Stunden zur Umsetzung gebracht. Dabei reagieren die Epoxydgruppen nahezu quantitativ mit den Aminogruppen, wodurch die Viskosität des entstehenden Produkts auf Werte zwischen 1000 und 20.000 mPas (25°C) steigt

### Ausführungsbeispiele

### Beispiel 1

Ein Epoxydharz-System zur Innenbeschichtung eines Trinkwasserrohres aus Polypropylen (25 Jahre in Betrieb) wird ausgekleidet mit einem Gemisch, das hergestellt wird aus
einer A-Komponente, enthaltend

| | |
|---|---|
| 1515 g Cyclohexan-1,2-dicarbonsäure-diglycidester | A1 |
| 151 g Hexan-1,6-diol-diglycidether | A2 |
| 30 g Aerosil® 380 | A3 |

und einer B-Komponente bestehend aus

| | |
|---|---|
| 685 g Isophorondiamin (IPDA) | B1 |
| 80 g eines Gemisches aus 2,2,4- und 2,4,4-Trimethyl-hexan-1,6-diamin | B1 |
| 150 mg einer 20%igen Lösung von Kaliumoctoat in Diethylenglykol, | B2 |

die in einem 5 l-Dissolver vorgemischt werden. Die Komponenten werden in eine 2-Komponenten-Mischmaschine mit einer Kombination aus rotierendem und statischer Mischer gegeben und im Verhältnis 2,217 : 1 in Schüssen von 50 g in das Rohr (Temperatur 13,5°C) ausgetragen. Mittels Druckluft wird im Rohr eine gleichmäßige 300 µm starke Schicht an den Innenwandungen erzeugt. Nach 27 Minuten wird ein deutlicher Viskositätsanstieg festgestellt, nach 8 Stunden ist die Schicht gehärtet. Bei der Messung der Sauerstoffdiffusion wurden folgende Werte gemessen:
vor der Beschichtung: Sauerstoffsättigung
nach der Beschichtung: 0,042 mg/m²d.

### Beispiel 2

Es wird eine A-Komponente vorformuliert und partiell umgesetzt. Dazu wird ein Gemisch aus

| | |
|---|---|
| 4,55 kg Cyclohexan-1,2-dicarbonsäure-diglycidester | A1 |
| 0,45 kg Hexan-1,6-diol-diglycidether | A2 |

in einem Rührreaktor eine Stunde gerührt und dazu unter Rühren langsam ein Gemisch aus

| | |
|---|---|
| 205 g Isophorondiamin (IPDA) | B1 |
| 25 g 2,2,4-/2,4,4-Trimethylhexan-1,6-diamin (TMD) | B1 |

gegeben. Die Temperatur steigt innerhalb einer Stunde auf 65°C. Nach dem Abkühlen werden zu dem Reaktionsprodukt 100 g Aerosil® 380 (A3) gegeben.

Das fertige Produkt AB weist eine Viskosität von 3220 mPas (25°C) auf.

Analog wird eine B-Komponente vorformuliert und partiell umgesetzt. Dazu wird ein Gemisch aus

| | |
|---|---|
| 1,85 kg IPDA | B1 und |
| 0,22 kg TMD | B1 mit |
| 0,45 kg Cyclohexan-1,2-dicarbonsäure-diglycidester | A1 |
| 0,05 kg Hexan-1,6-diol-diglycid-ether | A2 |

unter Rühren versetzt. Die Temperatur erreicht nach einer Stunde 55°C. Es wird noch drei Stunden weiter gerührt. Danach werden 0,5 g einer 20%igen Lösung von Kaliumoctoat (B2) in Diethylenglykol zugesetzt. Das Reaktionsprodukt (Komponente BA) weist eine Viskosität von 2760 mPas (25°C) auf.

Es werden wie in Beispiel 1 die Vorratsbehälter einer Mischmaschine mit den Komponenten AB und BA befüllt und über den dort beschriebenen Mischer im Verhältnis von 2,2 : 1 mit Schüssen von 50 g in ein Polypropylen-Trinkwasserrohr ausgetragen und durch Druckluft eine 300 µm starke Schicht auf der Rohrinnenwand erzeugt.

Bei der Messung der Sauerstoffdiffusion wurden folgende Werte gemessen:
vor der Beschichtung: Sauerstoffsättigung
nach der Beschichtung: 0,058 mg/m²d.

### Beispiel 3

Ein Epoxydharz-System zur Innenbeschichtung eines Trinkwasserrohres aus Polyethylen (35 Jahre in Betrieb) wird ausgekleidet mit einem Gemisch, das hergestellt wird aus
einer A-Komponente bestehend aus

| | |
|---|---|
| 1270 g 3,4-Epoxycyclohexanmethyl-3,4-epoxycyclohexancarboxylat | A1 |
| 258 g Cyclohexan-1,4-dimethanol-diglycidether | A1 |
| 151 g Hexan-1,6-diol-diglycidether | A2 |
| 27,5 g Aerosil® 380 | A3 |

und einer B-Komponente bestehend aus

| | |
|---|---|
| 925 g Isophorondiamin | B1 |
| 85 g eines Gemisches aus 2,2,4- und 2,4,4-Trimethyl-hexan-1,6-diamin | B1 |
| 250 mg einer 20%igen Lösung von Kaliumoctoat in Diethylenglykol, | B2 |

die in einem 5 l-Dissolver vorgemischt werden. Die Komponenten werden in eine 2-Komponenten-Mischmaschine mit einer Kombination aus rotierendem und statischer Mischer gegeben und im Verhältnis 1,69 : 1 in Schüssen von 50 g in das Rohr (Temperatur 13,5°C) ausgetragen. Mittels Druckluft wird im Rohr eine gleichmäßige 300 µm starke Schicht an den Innenwandungen erzeugt. Nach 22 Minuten wird ein deutlicher Viskositätsanstieg festgestellt, nach 5 Stunden ist die Schicht gehärtet. Bei der Messung der Sauerstoffdiffusion wurden folgende Werte gemessen:
vor der Beschichtung: Sauerstoffsättigung
nach der Beschichtung: 0,02 mg/m²d.

### Beispiel 4

Ein Epoxydharz-System zur Innenbeschichtung eines Trinkwasserrohres aus verzinktem Stahl (60 Jahre in Betrieb) wird ausgekleidet mit einem Gemisch, das hergestellt wird aus
einer A-Komponente bestehend aus

| | |
|---|---|
| 1560 g 1,4-Cyclohexanedimethanol bis(3,4-epoxycyclohexanecarboxylat) | A1 |
| 718 g Hexan-1,6-diol-diglycidether | A2 |
| 37 g Aerosil® 380 | A3 |
| und einer B-Komponente bestehend aus | |
| 935 g Isophorondiamin | B1 |
| 80 g eines Gemisches aus 2,2,4- und 2,4,4-Trimethyl-hexan-1,6-diamin | B1 |
| 800 mg einer 20%igen Lösung von Kaliumoctoat in Diethylenglykol, | B2 |

die in einem 5 l-Dissolver vorgemischt werden. Die Komponenten werden in eine 2-Komponenten-Mischmaschine mit einer Kombination aus rotierendem und statischer Mischer gegeben und im Verhältnis 2,281 : 1 in Schüssen von 70 g in das Rohr (Temperatur 13,5°C) ausgetragen. Mittels Druckluft wird im Rohr eine gleichmäßige 300 µm starke Schicht an den Innenwandungen erzeugt. Nach 42 Minuten wird ein deutlicher Viskositätsanstieg festgestellt, nach 7 Stunden ist die Schicht gehärtet. Bei der Messung der Sauerstoffdiffusion wurden folgende Werte gemessen:
Diffusionswert der Sperrschicht: 0,064 mg/m²d.

### Beispiel 5

Ein Epoxydharz-System zur Innenbeschichtung eines Trinkwasserrohres aus PVC (ca. 40 Jahre in Betrieb) wird ausgekleidet mit einem Gemisch, das hergestellt wird aus
einer A-Komponente bestehend aus

| | |
|---|---|
| 1980 g 1,2-Cyclohexan-endomethylen-dicarbonsäure-diglycidester | A1 |
| 233 g Hexan-1,6-diol-diglycidether | A2 |
| 37 g Aerosil® 380 | A3 |
| 22 g Aluminiumoxydhydroxid (EVONIK ALU C) | A4 |
| und einer B-Komponente bestehend aus | |
| 997,5 g Isophorondiamin | B1 |
| 79 g N,N-Bis-(3-aminopropyl)N-methylamin | B1 |
| 200 mg einer 20%igen Lösung von Kaliumoctoat in Diethylenglykol, | B2 |

die jeweils in einem 5 l-Dissolver vorgemischt werden. Die Komponenten werden in eine 2-Komponenten-Mischmaschine mit einer Kombination aus rotierendem und statischer Mischer gegeben und im Verhältnis 2,111 : 1 in Schüssen von 50 g in das Rohr (Temperatur 12,5°C) ausgetragen. Mittels Druckluft wird im Rohr eine gleichmäßige 300 µm starke Schicht an den Innenwandungen erzeugt. Nach 35 Minuten wird ein deutlicher Viskositätsanstieg festgestellt, nach 6 Stunden ist die Schicht gehärtet. Bei der Messung der Sauerstoffdiffusion wurden folgende Werte gemessen:
vor der Beschichtung: Sauerstoffsättigung
nach der Beschichtung: 0,048 mg/m²d.

### Beispiel 6

Ein Epoxydharz-System zur Innenbeschichtung eines Trinkwasserrohres aus HDPE (ca. 33 Jahre in Betrieb) wird ausgekleidet mit einem Gemisch, das hergestellt wird aus
einer A-Komponente bestehend aus

| | |
|---|---|
| 1840 g Bis((3,4-epoxycyclohexyl)methyl)adipat | A1 |
| 203 g Butan-1,4-diol-diglycidether | A2 |
| 37 g Aerosil® 380 | A3 |
| 55 g Eisenoxidpigment (Kremer Pigmente) | A4 |
| und einer B-Komponente bestehend aus | |
| 895 g Isophorondiamin | B1 |
| 105 g 2,2'-Dimethyl-4,4'-methylene-bis(cyclohexylamin) | B1 |
| 95 g N,N'-Bis-(sec-butyl)-4,4'-diaminodicyclohexylamin | B1 |
| 700 mg einer 20%igen Lösung von Kaliumoctoat in Diethylenglykol, | B2 |

die jeweils in einem 5 l-Dissolver vorgemischt werden. Die Komponenten werden in eine 2-Komponenten-Mischmaschine mit einer Kombination aus rotierendem und statischer Mischer gegeben und im Verhältnis 1,95 : 1 in Schüssen von 60 g in das Rohr (Temperatur 12,5°C) ausgetragen. Mittels Druckluft wird im Rohr eine gleichmäßige 300 µm starke Schicht an den Innenwandungen erzeugt. Nach 45 Minuten wird ein deutlicher Viskositätsanstieg festgestellt, nach 6,5 Stunden ist das Harz zu einer schwarzen Schicht gehärtet. Bei der Messung der Sauerstoffdiffusion wurden folgende Werte gemessen:
vor der Beschichtung: Sauerstoffsättigung
nach der Beschichtung: 0,032 mg/m²d.

### Beispiel 7

Ein Epoxydharz-System zur Innenbeschichtung eines Trinkwasserrohres aus PP-Copolymer (ca. 17 Jahre in Betrieb) wird ausgekleidet mit einem Gemisch, das hergestellt wird aus einer A-Komponente bestehend aus

| | |
|---|---|
| 1565 g Cyclohexan-1,2-dicarbonsäurediglycidester | A1 |
| 130 g Cyclohexan-1,4-dimethanol-diglycidether | A2 |
| 29 g Aerosil® 380 | A3 |
| 25 g Titandioxid mikronisiert (Kremer Pigmente) | A4 |
| und einer B-Komponente bestehend aus | |
| 980 g Isophorondiamin | B1 |
| 55 g 2,2'-Dimethyl-4,4'-methylene-bis(cyclohexylamin) | B1 |
| 900 mg einer 20%igen Lösung von Kaliumoctoat in Diethylenglykol, | B2 |

die jeweils in einem 5 l-Dissolver vorgemischt werden. Die Komponenten werden in eine 2-Komponenten-Mischmaschine mit einer Kombination aus rotierendem und statischer Mischer gegeben und im Verhältnis 1,69 : 1 in Schüssen von 40 g in das Rohr (Temperatur 14,5°C) ausgetragen. Mittels Druckluft wird im Rohr eine gleichmäßige 300 µm starke Schicht an den Innenwandungen erzeugt. Nach 30 Minuten wird ein deutlicher Viskositätsanstieg festgestellt, nach 6,5 Stunden ist das Harz zu einer weißen Schicht gehärtet. Bei der Messung der Sauerstoffdiffusion wurden folgende Werte gemessen:
vor der Beschichtung: Sauerstoffsättigung
nach der Beschichtung: 0,055 mg/m²d.

### Beispiel 8

Ein Epoxydharz-System zur Innenbeschichtung eines Trinkwasserrohres aus PP-Copolymer (ca. 17 Jahre in Betrieb) wird ausgekleidet mit einem Gemisch, das hergestellt wird aus einer A-Komponente bestehend aus

| | |
|---|---|
| 1600 g 1,4-Cyclohexanedimethanol bis(3,4-epoxycyclohexanecarboxylat) | A1 |
| 660 g Hexan-1,6-diol-diglycidether | A2 |
| 30 g Aerosil® 380 | A3 |
| 22 g Titandioxid mikronisiert (Kremer Pigmente) | A4 |
| 50 g Bentonit (1-2 µm Teilchengröße, pH-Wert 8 - 10) | A4 |
| und einer B-Komponente bestehend aus | |
| 849 g 4-Aminomethyl-1,8-octandiamin | B1 |
| 900 mg einer 20%igen Lösung von Kaliumoctoat in Diethylenglykol, | B2 |

die jeweils in einem 5 l-Dissolver vorgemischt werden. Die Komponenten werden in eine 2-Komponenten-Mischmaschine mit einer Kombination aus rotierendem und statischer Mischer gegeben und im Verhältnis 1,80 : 1 in Schüssen von 40 g in das Rohr (Temperatur 14,5°C) ausgetragen. Mittels Druckluft wird im Rohr eine gleichmäßige 300 µm starke Schicht an den Innenwandungen erzeugt. Nach 35 Minuten wird ein deutlicher Viskositätsanstieg festgestellt, nach 6,0 Stunden ist das Harz zu einer weißen Schicht gehärtet. Bei der Messung der Sauerstoffdiffusion wurden folgende Werte gemessen:
vor der Beschichtung: Sauerstoffsättigung
nach der Beschichtung: 0,068 mg/m²d.

### Beispiel 9

Ein Epoxydharz-System zur Innenbeschichtung eines Trinkwasserrohres aus PP-Copolymer (ca. 17 Jahre in Betrieb) wird ausgekleidet mit einem Gemisch, das hergestellt wird aus einer A-Komponente bestehend aus

| | |
|---|---|
| 1595 g Cyclohexan-1,2-dicarbonsäurediglycidester | A1 |
| 110 g Hexan-1,6- diglycidether | A2 |
| 32 g Aerosil® 380 | A3 |
| 20 g Titandioxid mikronisiert (Kremer Pigmente) | A4 |
| 45 g Bentonit (1-2 µm Teilchengröße, pH-Wert 8 - 10) | A4 |

und einer B-Komponente bestehend aus

| | |
|---|---|
| 790 g 4-Aminomethyl-1,8-octandiamin | B1 |
| 78 g Isophorondiamin | B1 |
| 900 mg einer 20%igen Lösung von Kaliumoctoat in Diethylenglykol, | B2 |

die jeweils in einem 5 l-Dissolver vorgemischt werden. Die Komponenten werden in eine 2-Komponenten-Mischmaschine mit einer Kombination aus rotierendem und statischer Mischer gegeben und im Verhältnis 1,75 : 1 in Schüssen von 40 g in das Rohr (Temperatur 14,5°C) ausgetragen. Mittels Druckluft wird im Rohr eine gleichmäßige 300 µm starke Schicht an den Innenwandungen erzeugt. Nach 30 Minuten wird ein deutlicher Viskositätsanstieg festgestellt, nach 5,75 Stunden ist das Harz zu einer weißen Schicht gehärtet. Bei der Messung der Sauerstoffdiffusion wurden folgende Werte gemessen:
vor der Beschichtung: Sauerstoffsättigung
nach der Beschichtung: 0,025 mg/m²d.

## Patentansprüche

1. Innenbeschichtungen von Trinkwasserrohren auf Epoxydharzbasis herstellbar durch Umsetzung eines Zwei-Komponenten-Systemes mit den Komponenten A und B,
enthaltend die Komponente A, umfassend
(A1) ein auf Cycloaliphaten und/oder Dicycloaliphaten basierenden Di- oder Polyglycidether oder-ester oder einem Cyclo- oder Dicycloaliphaten mit einer oder mehreren Epoxydgruppe/n direkt am/an den cycloaliphatischen Ring/en,
(A2) ein aliphatischer Diglycidether, wobei die aliphatische Kette zwischen den Glycidgruppen 2 bis 18 Kohlenstoffatome umfasst,
(A3) Siliciumdioxid
und die Komponente B, umfassend
(B1) ein oder mehrere aliphatische und/oder cycloaliphatische Di-, Tri- und/oder Polyamine mit primären und/oder sekundären Aminogruppen oder Gemische davon
(B2) eine Lösung eines Alkalimetallcarboxylats in einem Glykol oder einem Diglycidether und/oder eine Dispersion eines Additionsproduktes eines oder mehrerer Kaliumcarboxylate an einen nanoskaligen oder mikronisierten Feststoff in einem Glykol oder einem Diglycidether,
wobei die Komponenten A und B im Verhältnis ihrer reaktiven Äquivalente im Verhältnis der Epoxyd- zu den Amingruppen zwischen 1 : 0,3 bis 1 : 5 zur Reaktion gebracht werden.

2. Innenbeschichtung nach Anspruch 1,
**dadurch gekennzeichnet,**
**dass** als Komponente A1 Glycidester der 1,2-Cyclohexandicarbonsäure, der 1,2-Cyclohexan-endomethylen-dicarbonsäure, der 1,2-Cyclohexan-endomethylen-dicarbonsäure, der 1,3-Cyclohexandicarbonsäure, der 1,3-Cyclohexan-endomethylen-dicarbonsäure, der Methylen-bis(4,4'-cyclohexyl-carbonsäure) und/oder 3,4-Epoxycyclohexylmethyl-3,4-epoxycyclohexane-carboxylat, 7-Oxabicyclo[4.1.0]heptan-3-carboxyl-oxabicyclo[4.1.0]hept-3-yl-methylester, Bis((3,4-epoxycyclohexyl)methyl)adipat, 4,5-epoxytetrahydrophthalsäurediglycidylester, 1,4-Cyclohexanedimethanol bis(3,4-epoxycyclohexancarboxylat), Polyglycidether (A1) auf der Basis cycloaliphatischer Körper verwendet werden, z. B. 2,2-Bis-(2,3-epoxypropoxy-4-cyclohexyl)propan, Dicyclopentadien-dioxide, sowie auf Dicyclopentadien basierende Epoxyde enthalten sind.

3. Innenbeschichtung nach Anspruch 1 oder 2,
**dadurch gekennzeichnet,**
**dass** als Komponente A2 aliphatische Diglycidether wie Ethylenglykol-diglycidether, Diethylenglykol-diglycidether, Triethylenglykol-diglycidether, Propylenglykol-diglycidether, Butan-1,4-diol-diglycidether, Neopentylglykol-diglycidether, Pentan-1,5-diol-diglycidether, Hexan-1,6-diol-diglycidether, Bis-(2,3-epoxypropoxy)-2,2-dicyclohexyl-propan, Bis-(2,3-epoxypropoxy)-1,4-cyclohexan, Triglycidylether des Trimethylolpropans, Diglycidylether von Polypropylenglykolen, Triglycidylether von oxypropyliertem Glycerin oder Trimethylolpropan, Polytetrahydrofuran-diglycidether oder Pentaerythrit-tetraglycidether enthalten sind.

4. Innenbeschichtung nach einem der Ansprüche 1 bis 3,
**dadurch gekennzeichnet,**
**dass** als Komponente A4 weitere feste Zusatzstoffe, insbesondere nanoskalige und/oder mikronisierte Metalloxide, Metallhydroxide und/oder Metalloxidhydroxide und/oder Halbmetalloxide enthalten sind.

5. Innenbeschichtung nach einem der Ansprüche 1 bis 4,
**dadurch gekennzeichnet,**
**dass** die Glycidester A1 mit den Glycidethern A2 im Gewichtsverhältnis der beiden Glycidylverbindungen von 99,5 : 0,5 bis 75 : 25 kombiniert sind.

6. Innenbeschichtung nach einem der Ansprüche 1 bis 5,
**dadurch gekennzeichnet,**
**dass** als Komponente B1 aliphatische primäre Diamine, aliphatische sekundäre Diamine, aliphatische Triamine und Polyamine mit primären und/oder sekundären Aminogruppen oder Gemische davon enthalten sind.

7. Innenbeschichtung nach einem der Ansprüche 1 bis 6,
**dadurch gekennzeichnet,**
**dass** als Komponente B1 Gemische von 3-Aminomethyl-3,5,5-trimethylcyclohexylamin und 2,2,4-/2,4,4-Trimethylhexan-1,6-diamin (TMD) im Verhältnis von 0,5 : 99,5 bis 56 : 44 Teilen enthalten sind.

8. Innenbeschichtung nach einem der Ansprüche 1 bis 7,
**dadurch gekennzeichnet,**
**dass** als Alkalimetallcarboxylate B2 Kaliumoctoat, Kaliumacetat, Kaliumoleat, Kaliumformiat und/oder Kalium-2-ethyl-hexanoat enthalten sind.

9. Innenbeschichtung nach einem der Ansprüche 1 bis 8,
**dadurch gekennzeichnet,**
**dass** die Komponente A mit einem Teil der Komponente B zur Bildung einer Komponente AB und die Komponente B mit einem Teil der Komponente A zur Bildung einer Komponente BA umgesetzt werden und dann die Komponenten AB und BA unter Auftragung auf eine Rohrinnenfläche zur Umsetzung gebracht werden.

10. Innenbeschichtung nach einem der Ansprüche 1 bis 9,
**dadurch gekennzeichnet,**
**dass** bis zu 30% der äquivalenten Menge der Komponente A mit der Komponente B und bis zu 30% der äquivalenten Menge der Komponente B mit der Komponente A zur Bildung der Komponente AB und BA enthalten sind.

11. Innenbeschichtung nach einem der Ansprüche 1 bis 10,
**dadurch gekennzeichnet,**
**dass** als Komponente A4 Additive mit adsorbierender oder absorbierender Wirkung wie Montmorrilinit, Bentonite, basische mikronisierte oder nanoskalige Bentonite, polymere Adsorbentien wie Acrylate, vernetzte Acrylate, Hydrogele enthalten sind.

12. Verfahren zur Herstellung von Innenbeschichtungen von Trinkwasserrohren auf Epoxydharzbasis gemäß der Ansprüche 1 bis 11.
